# EUROPEAN PATENT APPLICATION

(11) **EP 3 560 641 A1**
(43) Date of publication of application: **30.10.2019**
(21) Application number: 19168917.3
(22) Date of filing: 12.04.2019
(51) Int. Cl.: B23B 39/00, B23B 39/16, B23B 39/24, B23B 41/00, B23Q 11/00

(54) **A PLANT FOR DRILLING LONG PRODUCTS IN STRUCTURAL STEEL OF A QUADRANGULAR SECTION TUBULAR TYPE**

(30) Priority: 24.04.2018 IT 201800004844
(71) Applicant: Manni Sipre S.p.A., 37135 Verona (IT)
(72) Inventor: MASSIMO, FABBRI, 37057 San Giovanni Lupatoto (VR) (IT)
(74) Representative: Autuori, Angelo

(57) **Abstract**

A plant for drilling long products (**P**) in structural steel of a quadrangular section tubular type comprising an entry (**E**) and an outlet (**U**) for the long product (**P**), a working plane (**π**) defining a first axis (**X**) in order to support the long product (**P**), locking means (**10**) to lock the latter on the working plane (**π**) and a supporting structure (**20**) overlying the working plane (**π**). The supporting structure (**20**) comprising three drilling heads (**31, 32, 33**) located above and laterally to the working plane (**π**) to drill the upper and lateral faces of the product (**P**) and control means (**41**) for each drilling head (**31, 32, 33**). The plant further comprising a working chamber (**50**) positioned underneath the working plane (**π**), a fourth drilling head (**34**) located in the working chamber (**50**), conveying means (**51**) of the shavings formed during the drilling of the long product (**P**) by the first, second and third drilling heads (**31, 32, 33**), control means (**42**) for the fourth drilling head (**34**) and a collecting chamber (**53**) for collecting the shavings coming from the conveying means (**51**). The plant is further characterized in the working plane (**π**) comprising at least one opening (**A**) of sufficient size to allow the passage of said fourth drilling head (**34**) in order to drill the lower face of the long product (**P**).

## Description

### Field of the Invention

The present invention generally relates to the technical field of processing long products in structural steel, more particularly to the technical field of long products in structural steel of a quadrangular section tubular type, such as beams.

### Background of the invention

There are several known drilling plants in the technical field of processing long products in structural steel.

A first well known plant involves the use of a couple of chucks moving the beam. The drilling is performed through the rotation of the latter, and the activation of a fixed laser tube.

Such plant, however, is very expensive and can be used for products of low-bulkiness.

A second well known plant, is made of a supporting structure having three working heads positioned above the working plane. Each head comprises a bundle of drilling bits actioned and guided by a cartesian robot.

It is understood that with the use of such plant it is possible to drill a maximum of three faces of the product at the same time. In order to drill the fourth face, it is necessary to unload the product, to rotate it and to reload it on the working plane, implying a considerable amount of time and the use of complementary means for the rotation of the beam itself.

A further use of such second plant involves the employment of very long bits in order to drill the couples of surfaces facing each other in a single processing.

It is however understood the limit in drilling thicker profiles and in obtaining holes having different diameter and position on the surfaces of the same couple.

Such second plant further involves the handling of the vibrations propagated during the processing of long products on the body of the same, with a subsequent use of means and spaces.

### Summary of the invention

Object of the present invention is to overcome, at least partially, the drawbacks illustrated above, by providing a plant for drilling long products in structural steel of a quadrangular section tubular type, being extremely efficient and relatively cost-effective.

Another object of the present invention is to reduce the working time and the use of complementary means for moving the long product.

Another object of the present invention is to handle the vibrations produced during the processing of the product, guaranteeing a precise drilling and minimum fluctuations along the body of the product itself.

Such objects, as well as others that will be clearer hereinafter, are fulfilled by a plant for the drilling of long tubular products in structural steel having one or more of the characteristics herein described, shown and/or claimed.

The dependent claims define advantageous embodiments of the invention.

### Brief description of the drawings

Further features and advantages of the present invention will become more evident by reading the detailed description of some preferred but not exclusive embodiment of the invention, illustrated as a non-limiting example, with the help of the annexed drawings wherein:

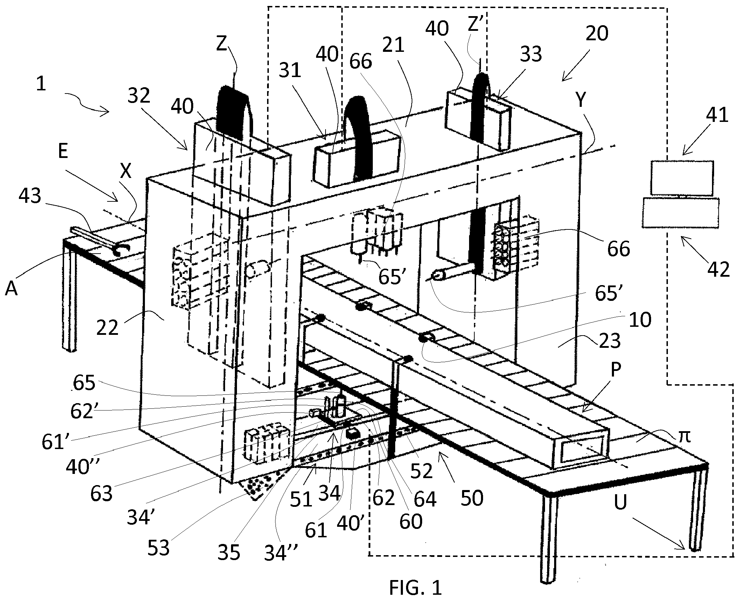

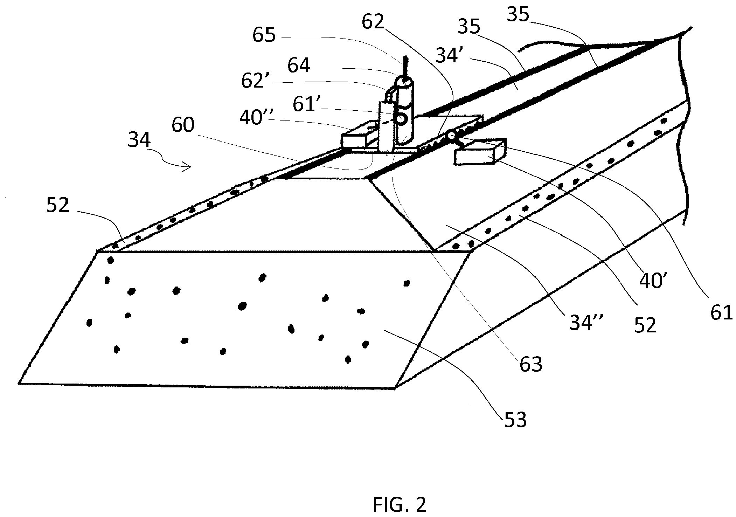

**FIG. 1** is an axonometric view of the plant **1** of which it is possible to observe an enlargement of a detail in **FIG. 2****.**

### Detailed description of a preferred embodiment.

With reference to the above mentioned figures, it is here described a plant **1** for drilling long products in structural steel of a quadrangular section tubular type.

Such plant **1** may comprise an entry **E** for the long product to drill **P** and an outlet **U** for the same long product, after being drilled.

Between the two, a working plane **π** may be interposed, such as a roller conveyor, defining an axis **X.**

Suitably, forwarding means **43** of the same product **P** along the roller conveyor may be provided, such as appropriate 'forks', as in the particular case here illustrated, or by exploiting the push of the user or the gravity generated by the potential positioning in a slight slope of the roller conveyor itself.

In correspondence of the plane **π** some locking means**10** such as pliers may be provided, in order to lock the product **P** on the plane **π** itself.

Suitably, above the plane **π** a supporting structure **20,** such as a portal, consisting of three beams **21, 22, 23,** respectively defining an horizontal axis **Y** and two vertical axes **Z, Z'** parallel to each other, may be provided.

Preferably, each beam may support a drilling head **31, 32, 33** having at least one working position and one rest position in which the latter are respectively into reciprocal contact and apart from the relative face to drill.

The first head **31** may be placed above the working plane **π** in order to drill the upper face of the long product **P.** The second and third head **32, 33** may be placed laterally to the working plane **π** and facing each other, in order to drill the lateral faces of the product **P.**

Each drilling head **31, 32, 33** may be actioned and guided by cartesian robots **40** moving each head along three directions defined by the axes **X, Y, Z** or axes parallel to them.

Suitably, a working chamber **50** placed below the working plane **π** may be provided, wherein a fourth drilling head may be placed **34.**

In this way, the drilling heads **31, 32** and **33, 34** may be respectively facing in twos, and the working plane **π** may be interposed among them.

The working chamber **50** may have a substantial longitudinal development, along an axis parallel to the axis **Y.**

Preferably, the fourth drilling head **34** may have a transversal section trapezoidal shape, with the smaller base**34**' reciprocally facing the working plane **π** and the lateral surfaces **34"** of a 'sloping' shape.

Suitably, the plant **1** may have conveying means **51** of the shavings, formed during the drilling of the long product **P** by the first, second and third drilling head **31, 32, 33.**

Such conveying means **51** may comprise the same sloping surfaces **34"** and a couple of conveyor belts **52** placed at the base of the latter.

The conveyor belts **52** may convey the shavings along the collecting chamber **53** placed in correspondence of their end position.

Advantageously, on the surface **34'** some guide means **35** may be provided, on which a cart **60** may shift through a linear actuator, such as the rack and pinion mechanism **61** - rack **62,** as shown in **FIG.2****.**

Preferably the rack **62** may be anchored to the cart **60.**

Moreover, the pinion **61** may be actioned by an electric motor **40'** so as to allow the linear movement of the rack **62** and, therefore, of the cart **60** anchored to it. Suitably, a second electric motor **40"** may be anchored to the cart **60** and it may action a second pinion **61'** movable along the rack **62'.** The latter may reciprocally be coupled with a piston **63** and a chuck **64** supporting the drilling bit **65.**

The linear movement of the rack **62'** may allow the movement of the drilling bit/tip **65** in parallel to the axes **Z, Z',** while the linear movement of the rack **62'** may allow the movement of the drilling bit **65** in parallel to the axis **Y.**

According to a particular embodiment, in order to allow the movement of the fourth drilling head **34** in parallel to the axis **X,** the product **P** may be shifted on the plane **π** or a further linear actuator may be added to the assembly made of the piston **63** and the chuck **64.**

Suitably, the roller conveyor may have an opening **A** of dimensions suitable for the movement of the drilling bit **65** for drilling the lower surface of the product **P.**

Furthermore, the first, the second and the third drilling head **31, 32, 33** may comprise a bit **65'** suitable for respectively coming into reciprocal contact with the upper and lateral faces of the product **P.**

Suitably, each drilling head **31, 23, 33, 34** may have a bundle of drilling bits **66** with bits of different diameters and/or to replace each other in case any of them are unusable.

Preferably, the movement of each drilling head **31, 32, 33, 34** may be run by appropriate control means **41, 42** such as a programming software or control pendants, knobs, levers or joysticks manually operable by the user. Such control means **41, 42** may be connected to motor means **40, 40', 40"** through appropriate cables.

From what described above, it is clear that the invention reaches the intended purposes.

The invention is susceptible to numerous modifications and changes. All the details can be replaced by other technically equivalent elements, and the materials can be different depending on requirements, without losing the scope of protection defined by the attached claims.

## Claims

1. A plant for drilling long products **(P)** in structural steel of a quadrangular section tubular type having an upper face, a lower face and two lateral faces, comprising:
- an entry **(E)** for the long product **(P)** to be drilled;
- an outlet **(U)** for the drilled 5 long product **(P);**
- a working plane (**π**) interposed between said entry **(E)**and said outlet **(U)**;
- locking means **(10)** of the long product **(P)** to lock it on said working plane (**π**) so that the lower face of the first **(P)** lies on the latter (**π**);
- at least one supporting structure **(20)** overlying said working plane (**π**), comprising:
- a first drilling head **(31)** located above said working plane (**π**) in order to drill the upper face of the long product **(P)**;
- a second and a third drilling head **(32, 33)** laterally placed on opposite sides with respect to said working plane (**π**) for drilling the lateral faces of the long product **(P)**;
- first control means**(41)** selectively and independently acting on each of said first, second and third drilling heads **(31, 32, 33)** to move them between a rest position far from the respective upper or lateral face and a working position in mutual contact with the same;
the plant also comprising:
- at least one working chamber **(50)** placed below said working plane (**π**);
- at least one fourth drilling head **(34)** placed in said working chamber**(50)**;
- conveying means **(51)** of the shavings formed during the drilling of the long product **(P)** by said first, second and third drilling heads **(31, 32, 33);**
- second control means **(42)** selectively and independently acting on on said fourth drilling head **(34)** to move it between a rest position far from the respective lower face and a working position in mutual contact therewith;
- at least one collecting chamber **(53)** operatively cooperating with said conveying means **(51)**in order to collect the shavings coming therefrom; and also
wherein said working plane (**π**) comprises at least one opening **(A)** of sufficient size to allow the passage of said fourth drilling head **(34)** to drill the lower face of the long product **(P).**

2. Plant according to claim 1, wherein said supporting structure**(20)** includes a first, second and third beam **(21, 22, 23),** wherein said first beam **(21)** being horizontal and defining a first axis **(Y),** said second and third beams **(22, 23)** being vertical and defining a second and third axis **(Z, Z')** mutually parallel to each other, said first, second and third beam **(21, 22, 23)** respectively including said first, second and third drilling head **(31, 32, 33).**

3. Plant according to claim 1 or 2, wherein said supporting structure **(20)** and said working plane (**π**) lie on the ground, said working chamber **(50)** being realized below the ground level.

4. Plant according to one or more of the preceding claims, wherein said working chamber **(50)** includes first guide means **(35, 62, 62')** for guiding said fourth drilling head **(34)** at least along an axis parallel to said first axis **(Y)** and at least along an axis parallel to said second and third axis **(Z, Z').**

5. Plant according to one or more of the preceding claims, wherein said working chamber **(50)** includes first motor means **(40', 40")** acting on said fourth drilling head **(34)** move it between said rest and working positions, said second control means **(42)** being operatively connected with said first motor means **(40', 40").**

6. Plant according to one or more of the preceding claims, wherein said conveying means **(51)** include at least one conveyor belt **(52),** respectively a pair of conveyor belts **(52),** respectively positioned, at the base of said fourth drilling head **(34),** the latter having a sloping surface **(34")** facing said working plane (**π**) to convey the shavings sequentially towards said at least one conveyor belt **(52),** respectively said pair of conveyor belts **(52),** and said collecting chamber **(53),** the latter being positioned at the end of said at least one conveyor belt **(52),** respectively of said pair of conveyor belts **(52).**

7. Plant according to one or more of the preceding claims, wherein said working plane (**π**) has a substantially longitudinal development defining a fourth axis **(X)** perpendicular to said first, second and third axis **(Y, Z, Z'),** being provided advancing means **(43)** of the long product **(P)** along said fourth axis **(X).**

8. Plant according to one or more of the preceding claims, wherein said supporting structure **(20)** includes second guide means**(40)**for guiding said first, second and third drilling head **(31, 32, 33),** being provided second motor means **(40)** selectively and independently acting on said first, second and third drilling head **(31, 32, 33)** to move them along said first, second or third and fourth axis **(Y, Z, Z', X)** or axes parallel to these, said second motor means **(40)** being operatively connected with said first control means **(41).**

9. Plant according to one or more of the preceding claims, wherein said first, second, third and fourth drilling head **(31, 32, 33, 34)** comprise at least one tip **(65, 65')** able to come into mutual contact respectively with the upper face, the lateral faces and the lower face of said long product **(P)** when said first and second control means **(41, 42)** move said first, second, third and fourth drilling head **(31, 32, 33, 34)** fbetween the rest position far from the respective upper, lateral and lower face and the working position in mutual contact with them.

10. Plant according to one or more of the preceding claims, wherein said first and second and third and fourth drilling head **(31, 32; 33, 34)** are two by two facing with respect to said working plane (**π**), the latter being interposed between them.
